# DEMANDE DE BREVET EUROPEEN

(11) **EP 0 940 619 A1**
(43) Date de publication de la demande: **08.09.1999**
(21) Numéro de dépôt: 99420053.3
(22) Date de dépôt: 01.03.1999
(51) Int. Cl.: F16L 23/04, F16L 23/22, F16L 23/036

(54) **Conduit, notamment conduit de fumée, comportant plusieurs éléments de conduit**

(30) Priorité: 03.03.1998 FR 9802799
(71) Demandeur: L'INDUSTRIELLE REGIONALE DU BATIMENT, 69760 Limonest (FR)
(72) Inventeur: Ferragut, Jean-Pierre, 26240 Saint Vallier (FR)
(74) Mandataire: Hartmann, Jean-Luc

(57) **Abrégé**

Ce conduit comporte plusieurs éléments de conduit de cheminée (2,4,6) et deux éléments de conduit voisins sont chaque fois reliés de manière étanche l'un à l'autre.

Chaque élément de conduit (2,4,6) présente à chacune de ces deux extrémités au moins une saillie radiale (12), telle par exemple un collet de serrage.

Un joint d'étanchéité (8) en matériau céramique est disposé entre deux éléments de conduit voisins.

Des moyens de serrage (10,22) sont prévus pour serrer l'une contre l'autre les saillies radiales (12) de deux éléments de conduit voisins en comprimant ainsi le joint d'étanchéité (8).

## Description

La présente invention concerne un conduit tubulaire céramique, tel un conduit de fumée, de vide-ordures ou de désenfumage comportant plusieurs éléments de conduit. Elle concerne plus précisément l'étanchéité qui est réalisée entre deux éléments de conduit voisins.

Les conduits de fumée doivent présenter une étanchéité à l'air et une étanchéité à l'eau. De plus, ces conduits sont soumis à des conditions de température et à des agressions chimiques relativement sévères selon le type d'appareils qu'ils desservent. En effet, les fumées sortant d'un poêle à bois sont à des températures très élevées de l'ordre de 500°C et ces fumées peuvent contenir des composés acides. Les dispositifs permettant de réaliser l'étanchéité entre deux éléments de conduit de cheminée dont donc soumis à d'importantes contraintes et doivent aussi réaliser une liaison étanche à l'air et à l'eau.

L'utilisation d'un mastic convient lorsque la température n'est pas trop élevée (inférieure à 300°C). Il peut être utilisé par exemple lorsque le conduit de cheminée est destiné à une chaudière basse température.

Il existe également des mortiers comportant un composé hydrofuge, mais ce dernier a généralement tendance à brûler lorsque la température du mortier atteint ou dépasse 400°C.

Le document EP-0 424 617 décrit un conduit de fumée composé de plusieurs tronçons de conduit assemblés par emboîtement au niveau de leurs extrémités, de manière à assurer une bonne étanchéité. Chaque tronçon de conduit comporte une extrémité présentant la forme d'un manchon évasé dans lequel l'autre extrémité du tronçon de conduit lui faisant suite peut être inséré, avec un certain jeu. Entre la paroi inférieure du manchon et la paroi extérieure de l'autre extrémité est disposé un élément d'étanchéité composé de fibres céramiques. Lors de l'introduction de l'autre extrémité, le matériau céramique se trouve comprimé, de sorte que l'on obtient ainsi une fixation suffisante et une bonne étanchéité au gaz de fumée. Un second joint peut être prévu pour parfaire l'étanchéité.

La solution proposée dans ce document permet de réaliser une bonne étanchéité à l'eau et à l'air, qui de plus résiste bien aux hautes températures et aux attaques acides. Toutefois, il faut que le matériau céramique soit bien mis en place lors de l'introduction du conduit voisin. Il faut bien maintenir l'élément d'étanchéité lors de l'introduction de ce tronçon et il faut veiller à le comprimer correctement.

La présente invention a alors pour but de fournir un conduit tubulaire céramique, tel un conduit de fumée, de vide-ordures ou de désenfumage comportant plusieurs éléments de conduit de cheminée, la liaison entre deux éléments de conduit voisins étant étanche à l'air et à l'eau même lorsqu'elle est soumise à des agressions chimiques acides et à des températures élevées. La liaison entre deux éléments de conduit de cheminée sera de préférence facile et rapide à réaliser.

À cet effet, le conduit qu'elle propose comporte plusieurs éléments de conduit de cheminée et deux éléments de conduit voisins sont chaque fois reliés de manière étanche l'un à l'autre.

Selon l'invention, chaque élément de conduit présente à chacune de ses deux extrémités au moins une saillie radiale, un joint d'étanchéité en matériau réfractaire malléable est disposé entre deux éléments de conduit voisins, et des moyens de serrage sont prévus pour serrer l'une contre l'autre les saillies radiales de deux éléments de conduit voisins en comprimant ainsi le joint d'étanchéité.

On réalise ainsi une bonne liaison mécanique entre deux éléments de conduit voisins et une bonne étanchéité est assurée grâce à la présence d'un joint réfractaire qui est comprimé.

Le joint utilisé est de préférence un joint sec réalisé dans un tissu céramique réfractaire.

Dans une forme de réalisation, la saillie radiale au nombre d'au moins une est un collet de serrage.

Une forme préférée prévoit que chaque élément de conduit est de forme générale cylindrique circulaire et présente à chaque extrémité un collet de forme tronconique s'évasant vers l'extrémité correspondante, et les moyens de serrage sont constitués par un collier de serrage sensiblement torique dont la section est en V et un boulon de serrage. Dans ce cas, pour garantir un bon serrage du joint, l'angle au sommet du V est avantageusement inférieur, de préférence strictement inférieur, au double de l'angle formé par la surface oblique d'un collet de l'élément de conduit et d'une section transversale de cet élément de conduit.

Pour faciliter la mise en place des éléments de conduit avant de les serrer l'un contre l'autre, on peut prévoir que chaque élément de conduit présente à l'une de ses extrémités, au niveau de son plan de jonction avec un élément de conduit voisin, une rainure annulaire tandis que l'autre extrémité présente, au niveau de son plan de jonction avec un élément de conduit voisin, une nervure de forme complémentaire à celle de la rainure.

De toute façon l'invention sera bien comprise à l'aide de la description qui suit, en référence au dessin schématique annexé, représentant à titre d'exemples non limitatifs deux formes de réalisation d'un conduit selon l'invention.
Figure 1 montre un conduit de fumée selon l'invention en perspective éclatée,
Figure 2 est une vue en coupe à échelle agrandie selon la ligne de coupe II-II de la figure 1, et
Figure 3 est une vue correspondant à la figure précédente montrant une variante de réalisation.

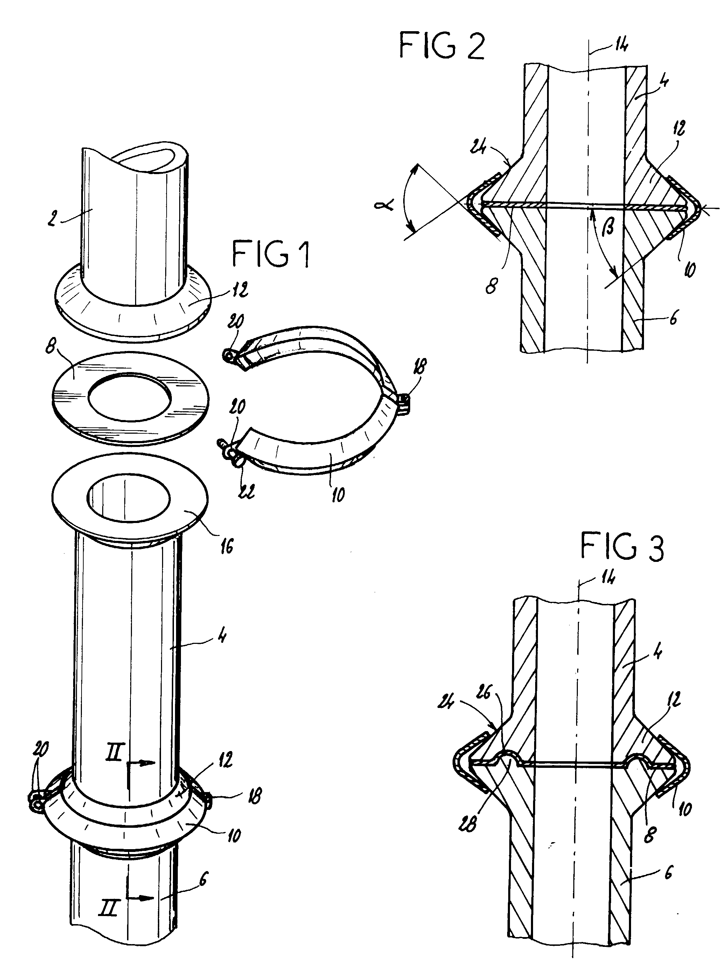

On distingue sur la figure 1 trois éléments de conduit de cheminée : un élément de conduit supérieur 2, un élément de conduit médian 4 et un élément de conduit inférieur 6. Entre deux éléments de conduit voisins se trouve à chaque fois un joint plat 8 et un collier de serrage 10 assure la liaison entre deux éléments de conduit voisins.

Chaque élément de conduit 2,4,6 est de forme générale cylindrique circulaire. Il présente à ses deux extrémités un collet 12 de forme tronconique. La base de grand diamètre du tronc de cône forme une face d'extrémité de l'élément de conduit 2,4,6 correspondant et le sommet de diamètre plus restreint du tronc de cône se rattache au corps cylindrique circulaire de l'élément de conduit correspondant. Ces éléments de conduit 2, 4, 6 sont réalisés dans un matériau céramique.

Chaque élément de conduit présente donc une forme de révolution autour d'un axe 14 et présente à chaque extrémité une surface annulaire plane transversale 16. Le diamètre extérieur de cette surface 16 correspond au grand diamètre d'un collet 12 et le diamètre intérieur de cette surface 16 correspond au diamètre intérieur du conduit de cheminée formé par les éléments de conduit de cheminée 2,4,6.

Le joint 8 est un joint plat malléable qui reprend sensiblement la forme des surfaces 16. Il est réalisé dans un tissu céramique réfractaire. Il vient se positionner entre deux éléments de conduit voisins en étant sensiblement centré sur l'axe 14.

Le collier de serrage 10 sert à relier deux éléments de conduit 2, 4 voisins mais aussi à mettre le joint 8 sous pression. Il est de forme générale torique et présente une section en V, la pointe du V se situant à l'extérieur du tore. Ce collier 10 est réalisé en deux parties de longueur sensiblement égale. Ces deux parties sont articulées à une extrémité à l'aide d'une charnière 18 et sont munies chacune à leur autre extrémité d'une patte 20. Les deux pattes 20 sont munies d'un perçage de telle sorte qu'elles puissent être reliées par un boulon 22. On retrouve là une structure générale de collier connue de l'homme du métier.

Le collier 10 selon l'invention doit permettre de mettre le joint 8 sous pression. À cet effet, l'angle a formé par les branches d'un V formant la section du collier 10 et inférieur, de préférence strictement inférieur, au double de l'angle β formé entre la surface 16 d'un élément de conduit et la surface oblique 24 du collet 12 correspondant.

Lorsque le collier 10 est alors en place autour de deux collets 12 de l'élément de conduit et d'un joint 8, le serrage du boulon 22 permet de réaliser la liaison mécanique entre les deux éléments de conduit correspondants voisins et la mise en compression du joint 8 intercalé entre ces deux éléments de conduit.

Le collier de serrage 10 réalise ainsi, entre deux éléments de conduit voisins, une liaison mécanique étanche grâce au joint 8 à l'eau et à l'air. Le joint 8 est un joint sec qui dans ces conditions de montage résiste à des températures élevées et à des agressions chimiques acides. Il existe sur le marché plusieurs tissus céramiques réfractaires qui conviennent pour la présente application et l'homme du métier peut choisir sans problème parmi ces matériaux celui qui lui semble être le plus adapté.

La figure 3 montre une variante de réalisation de l'invention. Dans cette variante, seules sont modifiées les surfaces 16 des éléments de conduit et en conséquence la forme du joint 8.

Dans cette forme de réalisation, on réalise au niveau de chaque élément de conduit, à l'une des extrémités, une rainure 26 annulaire tandis qu'à l'autre extrémité du même élément de conduit est réalisée au niveau de la surface 16 une nervure 28 annulaire de forme complémentaire à la forme de la rainure 26. Le joint 8 présente alors une forme lui permettant de prendre place entre deux surfaces 16, l'une munie d'une rainure, l'autre munie d'une nervure.

Dans cette forme de réalisation, le positionnement exact de deux éléments de conduit voisins est facilité avant la mise en place du collier de serrage 10.

Comme il va de soi, l'invention ne se limite pas aux formes de réalisation décrites ci-dessus à titre d'exemples non limitatifs ; elle en embrasse au contraire toutes les variantes.

Ainsi par exemple, le collier de serrage pourrait être remplacé par d'autres moyens de serrage. On pourrait en effet prévoir des saillies au niveau de chaque collet et serrer l'un contre l'autre deux éléments de conduit à l'aide de vis passant dans des perçages réalisés dans les saillies. On peut aussi imaginer des pinces élastiques qui viendraient enserrer deux brides réalisées chacune à une extrémité d'un élément de conduit. De nombreuses formes de réalisation sont ici envisageables.

La description ne prévoit la présence que d'un seul joint. Bien entendu, on peut placer à chaque fois entre deux éléments de conduit voisins deux joints, voire plusieurs joints. On pourrait par exemple avoir deux joints-plans placés l'un sur l'autre, mais aussi deux joints placés dans un même plan. Un premier joint serait par exemple placé au niveau du diamètre intérieur du conduit et le second joint viendrait entourer ce premier joint.

La forme du collet de serrage peut également être modifiée comme déjà indiqué ci-dessus. De nombreuses formes sont ici envisageables. On peut avoir une saillie radiale se prolongeant sur toute la périphérie de l'extrémité de l'élément de conduit correspondant mais on peut également avoir plusieurs saillies formant deux, trois voire plus "d'oreilles" afin de permettre un serrage entre deux éléments de conduit voisins.

## Revendications

1. Conduit tubulaire céramique, tel un conduit de fumée, de vide-ordures ou de désenfumage, comportant plusieurs éléments de conduit de cheminée (2,4,6) et deux éléments de conduit étant chaque fois reliés de manière étanche l'un à l'autre,
caractérisé en ce que
chaque élément de conduit (2,4,6) présente à chacune de ses deux extrémités au moins une saillie radiale (12),
en ce qu'un joint d'étanchéité (8) en matériau céramique malléable est disposé entre deux éléments de conduit voisins, et
en ce que des moyens de serrage (10,22) sont prévus pour serrer l'une contre l'autre les saillies radiales (12) de deux éléments de conduit voisins en comprimant ainsi le joint d'étanchéité (8).

2. Conduit tubulaire céramique selon la revendication 1, caractérisé en ce que le joint d'étanchéité (8) est un joint sec réalisé dans un tissu réfractaire.

3. Conduit tubulaire céramique selon l'une des revendications 1 ou 2, caractérisé en ce que la saillie radiale au nombre d'au moins une est un collet de serrage (12).

4. Conduit tubulaire céramique selon l'une des revendications 1 à 3, caractérisé en ce que chaque élément de conduit (2,4,6) est de forme générale cylindrique circulaire et présente à chaque extrémité un collet (12) de forme tronconique s'évasant vers l'extrémité correspondante, et
en ce que les moyens de serrage sont constitués par un collier de serrage (10) sensiblement torique dont la section est en V et un boulon de serrage (22).

5. Conduit tubulaire céramique selon la revendication 4, caractérisé en ce que l'angle (α) au sommet du V est inférieur, de préférence strictement inférieur, au double de l'angle (β) formé par la surface oblique d'un collet (12) de l'élément de conduit et d'une section transversale (16) de cet élément de conduit.

6. Conduit tubulaire céramique selon l'une des revendications 1 à 5, caractérisé en ce que chaque élément de conduit (2,4,6) présente à l'une de ses extrémités, au niveau de son plan de jonction (16) avec un élément de conduit voisin, une rainure annulaire (26) tandis que l'autre extrémité présente, au niveau de son plan de jonction (16) avec un élément de conduit voisin, une nervure (28) de forme complémentaire à celle de la rainure (26).
